# EUROPEAN PATENT SPECIFICATION

(11) **EP 1 414 226 B1**
(45) Date of publication and mention of the grant of the patent: **18.06.2008**
(21) Application number: 02023949.7
(22) Date of filing: 25.10.2002
(51) Int. Cl.: H04M 1/725

(54) **Mobile wireless communication handset with sound mixer and methods therefor**
Vorrichtung für drahtlose mobile Kommunikation mit Tonmischer und entsprechendes Verfahren
Dispositif de communication mobile sans fil mobile avec mélangeur audio et procédé correspondant

(43) Date of publication of application: 28.04.2004
(60) Divisional application: 08004912.5
(73) Proprietor: MOTOROLA, INC., Schaumburg, IL 60196 (US)
(72) Inventor: Fahey, Jennifer, Libertyville, IL 60048 (US); Brenner, David, Arlington Heights, IL 60004 (US); Rathod, Rohit R., Grayslake, IL 60030 (US)
(74) Representative: Cross, Rupert Edward Blount

(56) References cited:
- EP-A- 1 161 075
- WO-A-02/07412
- DE-A- 19 903 857

## Description

### FIELD OF THE INVENTIONS

The present inventions relate generally to mobile wireless communication devices, and more particularly to handheld cellular communication devices capable of mixing and playing polyphonic audio files and methods therefor.

### BACKGROUND OF THE INVENTIONS

Cellular handsets having sound mixers are known generally. In the P503i i-mode cellular telephone available from NTT DoCoMo, for example, the user must first select several soundtracks and then manually mix the selections. Particularly, the user first selects a music Category (Rock, Dance, Pops, etc.) soundtrack and then first and second Backing Pattern soundtracks in corresponding menus displayed sequentially after each selection. In the P503i cellular telephone, the selected soundtracks are mixed manually only after making all selections. Thus in the P503i cellular telephone, the user cannot listen to more than one selected soundtrack at a time during the soundtrack selection process until after making all selections and manually mixing, since only individual soundtracks are played during the selection process. The P503i cellular telephone also permits the user to adjust the Key and Tempo of the mix, but selected changes in these characteristics cannot be heard until after making the selections and manually mixing.

European Patent Application No. EP-A-1161075 describes a portable communication terminal apparatus having a tone generator which generates a sequence of tones to sound a music melody of a song in association with either of the transmission and the receipt of the message. A music composing means is provided for inputting a motif melody comprised of a rhythm and a pitch and for composing the music melody of a song based on the inputted motif melody. The music composing means may automatically input either of the rhythm and the pitch of the motif melody. A display device displays the inputted motif melody in a sequence or beat points for editing.

The various aspects, features and advantages of the present invention will become more fully apparent to those having ordinary skill in the art upon careful consideration of the following Detailed Description of the Invention with the accompanying drawings described below.

### BRIEF DESCRIPTION OF THE DRAWINGS

FIG. 1 is an exemplary mobile wireless communication handset.
FIG. 2 is an exemplary process flow diagram for implementing various aspects of the inventions.
FIG. 3 is an exemplary soundtrack data set file stored on the handset.
FIG. 4 is an exemplary audio mix data reference file.

### DETAILED DESCRIPTION OF THE INVENTIONS

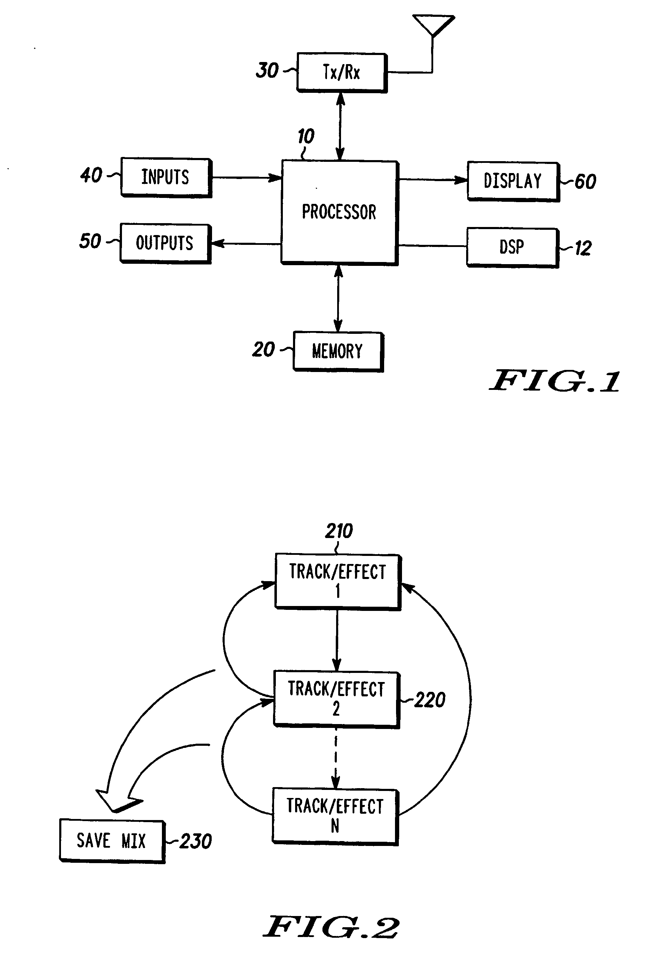

FIG. 1 is a handheld mobile wireless communication device comprising generally a processor 10 and a DSP 12, memory 20, for example ROM, RAM, EEPROM, etc., a transmitter and receiver 30, inputs 40, for example a keypad and/or joystick, microphone etc., outputs 50 including an audio output and an output signal connector interface, and a display 60.

The mobile wireless communication handset may be, for example, a cellular telephone, personal digital assistant, one-way or two-way pager, or some other handheld mobile communication device.

The inventions are drawn generally to methods for dynamically creating polyphonic audio mixes on the handheld mobile wireless communication devices, and generally to methods for creating and storing polyphonic mixes using only limited data storage resources on wireless communications handsets, and generally to methods for integrating audio data reference files and soundtrack data files in the form of a polyphonic audio format file for uploading from wireless communications handsets, and combinations thereof.

The inventions are implemented generally in software on handheld mobile wireless communication devices, including a polyphonic audio synthesizer software program. In one embodiment, the audio synthesizer is a MIDI standard synthesizer, known by those of ordinary skill in the art. In other embodiments, the synthesizer may be of another standard or a proprietary audio file synthesizer. The implementation of audio synthesizers on cellular handsets is known generally as discussed above in the Background of the instant specification.

The software is invoked by a user input command. In one embodiment, a polyphonic audio mix is created on a handheld mobile wireless communication device by selecting a first soundtrack, and playing the first soundtrack upon selection thereof. In the present inventions, unless indicated otherwise, the playing of a soundtrack or sound effect of one or all of the soundtracks of the polyphonic mix occurs upon selection thereof, without additional input by the user.

While the one soundtrack is playing, for example the first selected soundtrack, a subsequent or second soundtrack is selected and played along with the one or more prior selected soundtracks. Thus by selecting and playing each subsequently selected soundtrack while one or more previously selected soundtracks are playing, the polyphonic audio mix is mixed dynamically as it is complied, which provides the user with an immediate indication of how the composition of the selected soundtracks will sound as the audio during creation.

In one implementation, soundtracks are mixed by selecting and deselecting combinations of soundtracks, in any order, which are mixed dynamically upon selection and unmixed upon de-selection until the user complies a satisfying combination of soundtracks, which may include different sound effects discussed more fully below. The mix may be saved or discarded upon completion of the selection exercise.

In FIG. 2, a first soundtrack is played upon selection at 210, then a while the first soundtrack is playing a second soundtrack is played along with the first sound track upon selection of the second soundtrack at 220, etc. The selected soundtracks may also be deselected while playing up re-selecting the same sound track, for example by re-selecting the first soundtrack at 210. The process of selecting and deselecting soundtracks continues in no particular order until an appealing combinations of sound are mix, whereupon the user may save the mix at block 230, as discussed more fully below.

According to the process illustrated in FIG. 2, several soundtracks may be mixed, for example a first soundtrack is selected and played, and then a second soundtracks is selected and played with the first soundtrack while the first soundtrack is playing, and then a third soundtrack is selected and played while the first and second soundtracks are playing, etc. Any one or more of the selected soundtracks, for example the first soundtrack, may subsequently be subtracted from the mix, while the mix is playing, for example by de-selecting the first soundtrack. Alternatively, all of the selected soundtracks may be deselected simultaneously.

In one embodiment, a first soundtrack is selected from a first plurality of soundtracks, and a second soundtrack is selected from a second plurality of soundtracks. Additional soundtracks may be combined, or mixed, with the first and second tracks, as desired.

In one embodiment, at least one of the soundtracks is a base, or reference, soundtrack selected from a plurality of different base soundtracks. In a preferred embodiment, the reference soundtrack is selected before selecting any other soundtracks. Thereafter, one or more soundtracks are selected subsequently and mixed dynamically while the reference soundtrack and any other selected soundtracks are playing. Other embodiments are devoid of a base soundtrack.

The plurality of different reference soundtracks, for example, may be characterized generally by corresponding rhythmic and harmonic characteristics, for example those associated with Jazz, Rhythm & Blues, Soul, Rock, Latin, and Classical and Big Band, among other types of music, respectively.

Some of the soundtracks may be selected from a group of soundtracks having corresponding melodies. In one implementation, a melodic soundtrack is selected from a plurality of musical instruments soundtracks, for example, from either a percussion, or wind, or string instrument soundtrack. In another embodiment, each melodic soundtrack has corresponding variations. For example, upon selection of a "piano" soundtrack, there may be several piano soundtrack variation sub-selections among which to choose.

In embodiments where there is a reference soundtrack, the instrument or melodic soundtracks available for selection may be dependent upon, or specific to, the reference soundtrack selected. Where Rhythm & Blues is selected as the reference track, for example, the instrument soundtracks available may be piano, drum, bass and horn and corresponding variations thereof. Where the reference soundtrack is Rock, different instrument soundtracks and corresponding variations are available.

In another embodiment, an audio characteristic or effect is selected for a selected soundtrack while playing the soundtrack. Exemplary sound effects include echo and reverberation, among others. De-selection of a soundtrack for which one or more effects have been selected, also de-selects the corresponding effects.

The audio characteristic of the soundtrack is changed while the soundtrack is playing upon selecting the audio characteristic, thus providing the user with an immediate indication of how the selected characteristic affects the soundtrack as the polyphonic file is created. After selecting a soundtrack, a sound characteristic, or effect, for the selected soundtrack is selected and played. Generally more than one global effect may be changed or selected. Selection and de-selection of effects are also illustrated in FIG. 2.

In some embodiments, a global audio characteristic common to all of the selected soundtracks is selected and played while playing the selected soundtracks, thus changing the audio characteristic of all of the selected soundtracks while the soundtracks are playing. Generally more than one global effect may be changed or selected.

In some embodiments, the number of soundtracks selected is limited, for example to 4 or 5 soundtracks, for example the user may have the option of selecting one of three variations on as many as five different instruments. The user may also have the option of selection 1 or 2 or more track-specific sound effects, and 1 or 2 or more global sound effects applicable to all tracks.

Generally, the soundtracks and effects are made perceptible to a user of the handheld device, for example the soundtracks may be displayed or played audibly for selection by the user. In one embodiment, the soundtracks and effects are stored on the handheld device, and in another embodiment the soundtracks and effects are downloaded from some other location onto the device, either wirelessly or via a hardwired connection, by and upon selection thereof.

In another embodiment, the first soundtrack is selected to play for a first time interval, and another soundtrack is selected to play for a second time interval different than the first time interval. The time intervals of the soundtracks may be overlapping or separate.

In one embodiment, the soundtracks play the throughout the full interval of the audio mix, unless specified otherwise. In one embodiment, the time interval is determined when the soundtrack is selected relative to previously selected soundtracks already playing. Thus while one or more soundtracks play, the user may add an additional soundtrack by selecting the new soundtrack and after a time interval remove the new soundtrack by deselecting (merely re-selecting) it.

Upon selecting the soundtracks and any effects, and corresponding time intervals, the audio mix is saved. In one embodiment, the newly created audio mixes are saved in an audio format file, for example the MIDI format audio file. The MIDI audio format has a time reference, with which start and stop times for corresponding soundtracks may be associated.

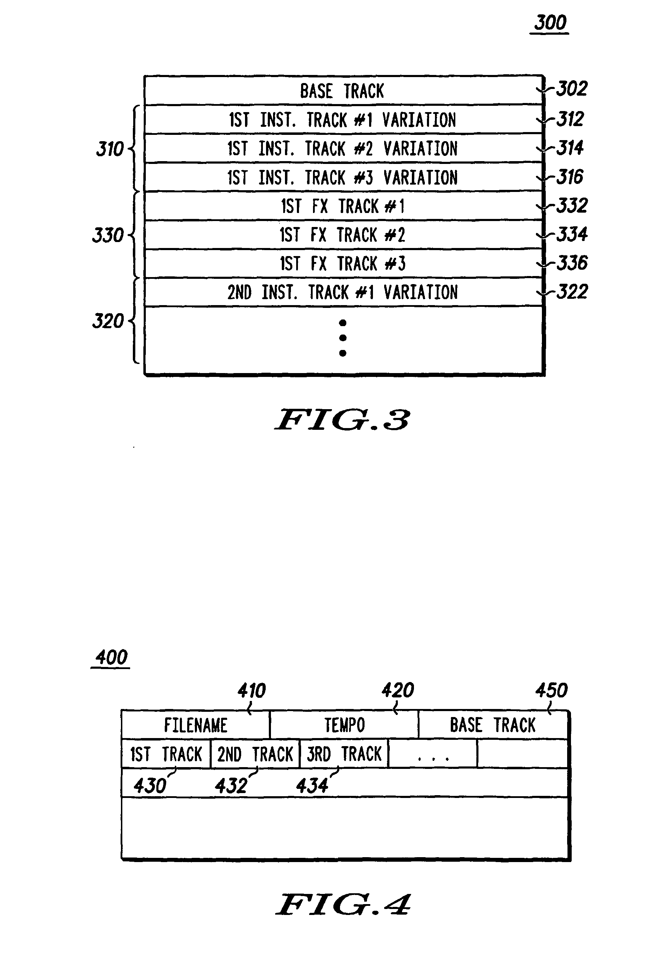

FIG. 3 illustrates an exemplary soundtrack data set file 300 that is stored on the handset in one embodiment of the invention. The exemplary data set includes a plurality of sets of instrument, or some other melodic, soundtracks, for example 310 and 320 in FIG. 3. In the exemplary embodiment each instrument or melodic soundtrack has three variations 312, 314 and 316, but more generally there may be more or less. Only one variation, variation 322, of the second plurality of instrument sets is illustrated, but generally there are more. The instruments tracks could instead be some other distinct melodic soundtrack and/ or variations thereon.

The exemplary soundtrack data set file 300 also includes a plurality of sound effect soundtracks 330 including an effect soundtrack 332, 334 and 336 for a corresponding one of the soundtracks 312, 314 and 316, respectively. Each of the sound effect tracks 332, 334 and 336 may be, for example, a reverberation soundtrack. Alternatively there could be another set of effects, for example a corresponding echo track, (not illustrated) for each of the soundtracks 312, 314 and 316. Generally, there are also, in some embodiments, corresponding effects soundtracks for each of the other soundtracks 322, etc. In some embodiments, there are no effect soundtracks. More generally, each soundtrack of the soundtrack data set file 300 in FIG. 3 is a different soundtrack.

The exemplary soundtrack data set file 300 also includes a corresponding reference or base soundtrack 302. In one embodiment, there is a plurality of unique soundtrack data set files each having a corresponding base track, e.g., Jazz, Blues, Rock, Pop, etc., and corresponding instrument variation soundtracks stored on the handset. Additional soundtrack data set files may be downloaded onto the device, for example for a fee or as part of a subscription.

In one embodiment, a polyphonic audio mix is created on the handset by entering reference data for corresponding soundtracks of a selected soundtrack data set file into an audio mix data reference file, for example by selecting plural soundtracks at a user interface, as discussed above. The audio mix data reference file having soundtrack reference data is representative of the user defined polyphonic audio mix. In one embodiment, the audio mix data reference file is not in an audio file format.

The audio mix data reference file having the reference data is stored on the handset as a distinct file, separately from the soundtrack data set files. The audio mix data reference file is itself preferably devoid of soundtrack data. Thus many audio mixes may be mixed and saved in the form of audio mix data reference files by the user without substantial memory usage, which is often limited on mobile communication handsets, since only the audio mix data reference file having the reference data is created and stored. In other embodiments, the audio mix data reference file includes copies of the soundtrack data, but this requires comparatively substantial memory for storage.

In FIG. 4, the audio mix data reference file 400 includes a file name field 410, one or more global sound file effect fields 420, for example Tempo and/ or Key, and a plurality of soundtrack fields 430, 432, 434, etc. In embodiments where a base track is desired, the audio mix data reference file includes a base track field 450.

The file name field 410 stores file name data designated by the user for the corresponding user defined polyphonic audio file. The file name data may be entered by the user, for example upon completion of mixing the soundtrack.

The global sound effect reference field 420 stores global effect reference data, which is communicated to the synthesizer when the polyphonic audio mix is played. More than one global effect reference may be stored in the field 420, or alternatively multiple reference data fields may be provided for storing corresponding sound effect references. In one embodiment, the one or more sound effect fields provide the audio synthesizer with instructions for the sound effects that are to be played for the corresponding polyphonic audio mix.

The base track field 450 stores base track reference data, which references the base track, if any, associated with the corresponding polyphonic audio mix. In one embodiment, the base track field provides the audio synthesizer with instructions for which base track is to be played for the corresponding polyphonic audio mix.

The soundtrack reference fields 430, 432, etc. store soundtrack reference data, which references corresponding soundtracks associated with the corresponding polyphonic audio mix. In one embodiment the presence of particular soundtrack reference in the soundtrack fields indicates that the soundtrack has been selected.

In some embodiments, time is associated with each of the soundtrack reference fields. The time may, for example, be measured as a delay from the time that the polyphonic mix is initiated or played. Thus the soundtrack referenced in each field is played at the corresponding time associated therewith. A subsequent entry of a reference to the same soundtrack played previously may be used to toggle the soundtrack off. Thus the start and stop time for the soundtrack is entered as the soundtrack is selected and de-selected.

In other embodiment, the audio mix data reference file 400 has a reference field corresponding to each of the soundtracks and effects in a corresponding soundtrack data set file. Each field of the audio mix data reference file 400 also has a on/off code which is set or re-set upon selection of the corresponding soundtrack when the corresponding polyphonic mix is created. Thus, when it is desired to play the polyphonic mix, the audio mix data reference file 400 references only those soundtracks and effects that have been switched on for play by the audio synthesizer.

According to another aspect of the invention, the audio mix data reference file 400 without soundtrack data is integrated with a corresponding soundtrack data set file 300 into a common audio format file for uploading from the handset, for example to another user.

In one embodiment, the integrated audio mix data reference and the soundtrack data set files are integrated irreversibly. Thus the recipient of the integrated audio file may listen to the audio file as mixed originally, but cannot extract the soundtrack data set file 300 for making new audio files based on the soundtrack data set file. Providing the irreversibly integrated audio format file permits users to sample the associated soundtrack data set file, limited to the corresponding mix, without providing full access thereto.

While the present inventions and what is considered presently to be the best modes thereof have been described in a manner that establishes possession thereof by the inventors and that enables those of ordinary skill in the art to make and use the inventions, it will be understood and appreciated that there are many equivalents to the exemplary embodiments disclosed herein and that myriad modifications and variations may be made thereto without departing from the scope of the inventions, which are to be limited not by the exemplary embodiments but by the appended claims.

## Claims

1. A method for a polyphonic audio mix on a handheld mobile wireless communication device, **characterized by**:
selecting a first soundtrack (210);
playing the first soundtrack upon selecting the first soundtrack;
selecting a second soundtrack (220) while playing the first soundtrack (210);
playing the second soundtrack upon selecting the second soundtrack while playing the first soundtrack.

2. The method of Claim 1, a soundtrack data set file (300) including the first and second soundtracks stored on the handheld mobile wireless communication device,
entering first reference data for the first soundtrack of the soundtrack data set file into an audio mix data reference file (400) upon selecting the first soundtrack,
entering second reference data for the second soundtrack of the soundtrack data set file into the audio mix data reference file upon selecting the second soundtrack,
the audio mix data reference file representative of a user defined polyphonic audio mix;
storing (230) the audio mix data reference file on the handheld mobile wireless communication device.

3. The method of Claim 2, playing the user defined polyphonic audio mix on the handheld mobile wireless communication device by playing the first and second soundtracks of the soundtrack data set file referenced in the audio mix data reference file.

4. The method of Claim 1, selecting the first soundtrack from a first plurality of soundtracks (310) perceptible by a user of the handheld mobile wireless communication device, selecting the second soundtrack from a second plurality of soundtracks (320) perceptible by a user of the handheld mobile wireless communication device.

5. The method of Claim 1,at least one of the soundtracks is a reference soundtrack (302), selecting the reference soundtrack before selecting a subsequent soundtrack.

6. The method of Claim 5, selecting at least one subsequent soundtrack after selecting the reference soundtrack (302) while the reference soundtrack is playing, mixing the at least one subsequent soundtrack selected with the reference soundtrack upon selecting the subsequent soundtrack.

7. The method of Claim 1, selecting the first soundtrack from a plurality of reference soundtracks each having corresponding rhythmic and harmonic characteristics.

8. The method of Claim 7, selecting the second soundtrack from a plurality of soundtracks having a corresponding melody.

9. The method of Claim 1, stopping the playing of the first soundtrack while the first and second soundtracks are playing.

10. The method of Claim 1, selecting an audio characteristic (330) for at least one of the selected soundtracks while playing the soundtrack for which the audio characteristic is selected, changing the audio characteristic of the selected soundtrack while the soundtrack is playing upon selecting the audio characteristic.

11. The method of Claim 1, selecting a global audio characteristic common to all selected soundtracks while playing the selected soundtracks for which the global audio characteristic is selected, changing the audio characteristic of all selected soundtracks while the soundtracks are playing upon selecting the global audio characteristic.

12. The method of Claim 1, selecting the first soundtrack to play for a first time interval, selecting the second soundtrack to play for a second time interval different than the first time interval.

## Patentansprüche

1. Verfahren für eine polyphone Tonmischung auf einer in der Hand zu haltenden mobilen drahtlosen Kommunikationsvorrichtung, **gekennzeichnet durch**:
Auswahl einer ersten Tonspur (210);
Abspielen der ersten Tonspur bei Auswahl der ersten Tonspur;
Auswahl einer zweiten Tonspur (220) während die erste Tonspur (210) abgespielt wird;
Abspielen der zweiten Tonspur bei Auswahl der zweiten Tonspur, während die erste Tonspur abgespielt wird.

2. Verfahren nach Anspruch 1, wobei eine Tonspurdatensatzdatei (300) die auf der in der Hand zu haltenden mobilen drahtlosen Kommunikationsvorrichtung gespeicherte erste und zweite Tonspur umfasst; wobei das Verfahren die folgenden Schritte aufweist:
bei Auswahl der ersten Tonspur, Eingabe erster Referenzdaten für die erste Tonspur der Tonspurdatensatzdatei in eine Tonmischungsdatenreferenzdatei;
bei Auswahl der zweiten Tonspur, Eingabe zweiter Referenzdaten für die zweite Tonspur der Tonspurdatensatzdatei in die Tonmischungsdatenreferenzdatei;
wobei die Tonmischungsdatenreferenzdatei eine benutzerdefinierte polyphone Tonmischung darstellt;
Speichern (230) der Tonmischungsdatenreferenzdatei auf der in der Hand zu haltenden mobilen drahtlosen Kommunikationsvorrichtung.

3. Verfahren nach Anspruch 2, wobei das Abspielen der benutzerdefinierten polyphonen Tonmischung auf der in der Hand zu haltenden mobilen drahtlosen Kommunikationsvorrichtung durch Abspielen der ersten und zweiten Tonspur der Tonspurdatensatzdatei, die in der Tonmischungsdatenreferenzdatei referenziert werden, stattfindet.

4. Verfahren nach Anspruch 1, wobei die erste Tonspur aus einer ersten Vielzahl von Tonspuren (310), die von einem Benutzer der in der Hand zu haltenden mobilen drahtlosen Kommunikationsvorrichtung wahrnehmbar ist, ausgewählt wird, und wobei die zweite Tonspur aus einer zweiten Vielzahl von Tonspuren (320), die von einem Benutzer der in der Hand zu haltenden mobilen drahtlosen Kommunikationsvorrichtung wahrnehmbar ist, ausgewählt wird.

5. Verfahren nach Anspruch 1, wobei mindestens eine der Tonspuren eine Referenztonspur (302) ist, wobei die Referenztonspur vor der Auswahl einer nachfolgenden Tonspur ausgewählt wird.

6. Verfahren nach Anspruch 5, wobei mindestens eine nachfolgende Tonspur nach der Auswahl der Referenztonspur (302) ausgewählt wird, während die Referenztonspur abgespielt wird, wobei die mindestens eine ausgewählte nachfolgende Tonspur mit der Referenztonspur bei Auswahl der nachfolgenden Tonspur gemischt wird.

7. Verfahren nach Anspruch 1, wobei die erste Tonspur aus einer Vielzahl von Referenztonspuren ausgewählt wird, von denen jede entsprechende rhythmische und harmonische Eigenschaften hat.

8. Verfahren nach Anspruch 7, wobei die zweite Tonspur aus einer Vielzahl von Tonspuren mit entsprechender Melodie ausgewählt wird.

9. Verfahren nach Anspruch 1, wobei das Abspielen der ersten Tonspur beendet wird, während die erste und zweite Tonspur abgespielt werden.

10. Verfahren nach Anspruch 1, wobei ein Tonmerkmal (330) für mindestens eine der ausgewählten Tonspuren ausgewählt wird, während die Tonspur abgespielt wird, für die das Tonmerkmal ausgewählt wird, wobei das Tonmerkmal der ausgewählten Tonspur bei Auswahl des Tonmerkmals verändert wird, während die Tonspur abgespielt wird.

11. Verfahren nach Anspruch 1, wobei ein globales Tonmerkmal ausgewählt wird, das für alle ausgewählten Tonspuren gleich ist, während die ausgewählten Tonspuren, für die das globale Tonmerkmal ausgewählt wird, abgespielt werden, wobei das Tonmerkmal aller ausgewählten Tonspuren bei Auswahl des globalen Tonmerkmals verändert wird, während die Tonspuren abgespielt werden.

12. Verfahren nach Anspruch 1, wobei die erste Tonspur zum Abspielen für ein erstes Zeitintervall ausgewählt wird, und
wobei die zweite Tonspur zum Abspielen für ein zweites Zeitintervall, das sich von dem ersten Zeitintervall unterscheidet, ausgewählt wird.

## Revendications

1. Procédé de mélange audio polyphonique dans un dispositif de communication sans fil mobile de poche, **caractérisé par** les étapes consistant à:
sélectionner une première piste sonore (210);
lire la première piste sonore postérieurement à la sélection de la première piste sonore;
sélectionner une seconde piste sonore (200) lors de la lecture de la première piste sonore (210);
lire la seconde piste sonore postérieurement à la sélection de la seconde piste sonore lors de la lecture de la première piste sonore;

2. Procédé selon la revendication 1, dans lequel un fichier d'ensemble de données de pistes sonores (300) comporte les première et seconde pistes sonores stockées dans le dispositif de communication sans fil mobile de poche, comportant les étapes consistant à
entrer des premières données de référence pour la première piste sonore du fichier d'ensemble de données de pistes sonores dans un fichier de référence de données de mélange audio (400) postérieurement à la sélection de la première piste sonore,
entrer des secondes données de référence pour la seconde piste sonore du fichier d'ensemble de données de pistes sonores dans le fichier de référence de données de mélange audio postérieurement à la sélection de la seconde piste sonore,
le fichier de référence de données de mélange audio étant représentatif d'un mélange audio polyphonique défini par l'utilisateur;
stocker (230) le fichier de référence de données de mélange audio dans le dispositif de communication sans fil mobile de poche.

3. Procédé selon la revendication 2, comportant l'étape consistant à lire le mélange audio polyphonique défini par l'utilisateur sur le dispositif de communication sans fil mobile de poche en lisant les première et seconde pistes sonores du fichier d'ensemble de données de pistes sonores référencé dans le fichier de référence de données de mélange audio.

4. Procédé selon la revendication 1, comportant les étapes consistant à sélectionner la première piste sonore à partir d'une première pluralité de pistes sonores (310) perceptible par un utilisateur du dispositif de communication sans fil mobile de poche, et à sélectionner la seconde piste sonore à partir d'une seconde pluralité de pistes sonores (320) perceptible par un utilisateur du dispositif de communication sans fil mobile de poche.

5. Procédé selon la revendication 1, dans lequel au moins une des pistes sonores est une piste sonore de référence (302), comportant l'étape consistant à sélectionner la piste sonore de référence préalablement à la sélection d'une piste sonore subséquente.

6. Procédé selon la revendication 5, comportant les étapes consistant à sélectionner au moins une piste sonore subséquente postérieurement à la sélection de la piste sonore de référence (302) lorsque la piste sonore de référence est en cours de lecture, et à mélanger la au moins une piste sonore subséquente sélectionnée avec la piste sonore de référence postérieurement à la sélection de la piste sonore subséquente.

7. Procédé selon la revendication 1, comportant l'étape consistant à sélectionner la première piste sonore à partir d'une pluralité de pistes sonores de référence ayant chacune des caractéristiques rythmiques et harmoniques correspondantes.

8. Procédé selon la revendication 7, comportant l'étape consistant à sélectionner la seconde piste sonore à partir d'une pluralité de pistes sonores ayant une mélodie correspondante.

9. Procédé selon la revendication 1, comportant l'étape consistant à mettre fin à la lecture de la première piste sonore lorsque les première et seconde pistes sonores sont en cours de lecture.

10. Procédé selon la revendication 1, comportant les étapes consistant à sélectionner une caractéristique audio (330) pour au moins l'une des pistes sonores sélectionnées, lors de la lecture de la piste sonore pour laquelle la caractéristique audio est sélectionnée, et à modifier la caractéristique audio de la piste sonore sélectionnée lorsque la piste sonore est en cours de lecture postérieurement à la sélection de la caractéristique audio.

11. Procédé selon la revendication 1, comportant les étapes consistant à sélectionner une caractéristique audio globale commune à toutes les pistes sonores sélectionnées lors de la lecture des pistes sonores sélectionnées pour lesquelles la caractéristique audio globale est sélectionnée, à modifier la caractéristique audio de toutes les pistes sonores sélectionnées lorsque les pistes sonores sont en cours de lecture postérieurement à la sélection de la caractéristique audio globale.

12. Procédé selon la revendication 1, comportant les étapes consistant à sélectionner la première piste sonore à lire sur un premier intervalle de temps, et à sélectionner la seconde piste sonore à lire sur un second intervalle de temps différent du premier intervalle de temps.
